# EUROPÄISCHE PATENTSCHRIFT

(11) **EP 2 121 833 B1**
(45) Veröffentlichungstag und Bekanntmachung des Hinweises auf die Patenterteilung: **06.10.2010**
(21) Anmeldenummer: 08709060.1
(22) Anmeldetag: 18.02.2008
(51) Int. Cl.: C08L 25/12, C08L 35/06, C08L 51/04, C08L 55/02, C08L 77/00

(54) **FORMMASSEN MIT REDUZIERTER ANISOTROPIE DER SCHLAGZÄHIGKEIT**
MOLDING COMPOUNDS WITH REDUCED ANISOTROPY REGARDING IMPACT RESISTANCE
MASSES MOULABLES DONT LA RÉSILIENCE A UNE ANISOTROPIE RÉDUITE

(30) Priorität: 19.02.2007 EP 07102636
(43) Veröffentlichungstag der Anmeldung: 25.11.2009
(73) Patentinhaber: BASF SE, 67056 Ludwigshafen (DE)
(72) Erfinder: WEBER, Martin, 67487 Maikammer (DE); HÖNL, Hans, 67271 Obersülzen (DE); ITTEMANN, Peter, 68623 Lampertheim (DE); HAENSEL, Werner, 67360 Lingenfeld (DE)
(74) Vertreter: Jacobi, Markus Alexander
(86) Internationale Anmeldenummer: PCT/EP2008/051918
(87) Internationale Veröffentlichungsnummer: WO 2008/101888

(56) Entgegenhaltungen:
- WO-A-2005/071013
- DE-A1- 10 347 870
- DE-A1-102005 036 981

## Beschreibung

Die vorliegende Erfindung betrifft thermoplastische Formmassen mit verbesserten mechanischen Eigenschaften enthaltend mindestens vier unterschiedliche Komponenten. Die Formmassen enthalten ein oder mehrere Styrol-Copolymere, ein oder mehrere Polyamide, mindestens einen Pfropfkautschuk, sowie mindestens ein Terpolymer mit einem geringen Gehalt an Oligomeren.

Die Formmassen können als zusätzliche Komponenten gegebenenfalls z.B. weitere Kautschuke, ein mindestens monofunktionellen Anhydrid mit einer Molmasse kleiner 3000 g/mol, gegebenenfalls faser- oder teilchenförmige Füllstoffe oder deren Mischungen sowie gegebenenfalls weitere Zusätze enthalten.

Außerdem betrifft die vorliegende Erfindung die Herstellung dieser thermoplastischen Formmassen sowie die Verwendung der Formmassen zur Herstellung von Formkörpern, beispielsweise für Haushaltsartikel, elektronische Bauteile, Haushaltsgeräte, Gartengeräte, medizinisch-technische Geräte und Kfz-Bauteile.

Verschiedene Polymerblends aus Styrol-Copolymeren und Polyamiden sind seit vielen Jahren bekannt, beispielsweise aus EP-A 202 214, EP-A 402 528, EP-A 784 080 und DE-A 100 24 935.

Aus EP-A 202 214 kennt der Fachmann thermoplastische Zusammensetzungen, die neben einer Pfropfpolymerkomponente (beispielsweise einem ABS-Harz) eine Polyamidkomponente (beispielsweise Nylon) und ein Terpolymer (beispielsweise aus den Monomeren Styrol, Acrylnitril und Maleinsäureanhydrid) enthalten.

Aus EP-A 402 528 ist eine schlagfeste thermoplastische Mischung bekannt, die neben einem Pfropfpolymer (beispielsweise ABS) auch ein Polyamidharz, ein Terpolymer (beispielsweise aus Styrol, einem Dicarbonsäureanhydrid und Maleinsäureimid) sowie gegebenenfalls eine weitere Polymerkomponente enthält.

Im Dokument EP-A 784 080 werden Polymerzusammensetzungen beschrieben, die mindestens drei Komponenten enthalten, wobei Komponente A ein Pfropfpolymer darstellt, Komponente B ein thermoplastisches Polyamid ist und Komponente C ein Terpolymer aus beispielsweise Styrol, Acrylnitril und Maleinsäureanhydrid darstellt. Als weitere Komponente können die in EP-A 784 080 dargestellten Zusammensetzungen auch Phthalsäureanhydrid enthalten.

In DE-A 100 24 935 werden Polymerblends beschrieben, die mindestens vier Komponenten aufweisen. Die beschriebenen Zusammensetzungen enthalten mindestens eine kautschukelastische Pfropfpolymerkomponente, mindestens ein Polyamid, mindestens einen Verträglichkeitsvermittler mit polaren Gruppen sowie mindestens ein VinylCopolymerisat.

Während die im Stand der Technik beschriebenen thermoplastischen Zusammensetzungen zum Teil eine hohe Wärmeformbeständigkeit, eine gute Reißdehnung und gesteigerte Witterungsfestigkeit aufweisen, besteht häufig ein hohes Maß an Anisotropie bezüglich der Schlagzähigkeit der daraus hergestellten Formteile.

Unter Anisotropie versteht man im Allgemeinen die Richtungsabhängigkeit einer physikalischen Eigenschaft. Für den Einsatz bei der Herstellung von mechanisch belastbaren Formteilen ist es von großer Bedeutung, dass die Schlagzähigkeit der hergestellten Formteile kein hohes Maß an Anisotropie aufweist, da mechanische Belastungen in der Regel nicht nur in einer Richtung auftreten können.

Binäre Blends aus Polyamiden und Styrol-Copolymeren weisen aufgrund der Unverträglichkeit zwischen Polyamid und SAN (Matrix und Styrol-Acrylnitril-Copolymere) eine sehr schlechte Zähigkeit auf. Es ist bereits bekannt, dass durch die Verwendung funktionalisierter SAN-Polymere die Zähigkeit von Polyamid-Styrolcopolymer-Mischungen signifikant gesteigert werden kann. Außerdem weisen solche Produkte interessante Eigenschaften wie eine hohe Schlagzähigkeit, gute Fließfähigkeit und Chemikalienresistenz auf.

Untersuchungen zur "in situ" Verträglichkeitsvermittlung der Komponenten in Styrolcopolymer/Polyamid-Mischungen sind dem Fachmann aus der Literatur bekannt, siehe zum Beispiel die folgenden Veröffentlichungen: V.J. Triacca, S. Ziaee, J.W. Barlow, H. Kesskula, D.R. Paul, Polymer 32, 1401 (1991); B. Majundar, H. Keskkula, D.R. Paul, N.G. Harvey, Polymer 35, 4263 (1994); C.W. Lee, S.H. Ryu, H.S. Kim, J. Appl. Polym. Sci., 64, 1595 (1997); R.A. Kudva, H. Kesskula, D.R. Paul, Polymer 39, 2447 (1998); C. Lacasse, B.D. Favis, Adv. Polym. Techn. 18, 255 (1999); R.A. Kudva, H. Kesskula, D.R. Paul, Polymer 41, 239 (2000).

Als Verträglichkeitsvermittler zwischen Polyamiden und Styrol-Copolymeren eignen sich vor allem Styrol-Acrylnitril-Maleinsäureanhydrid-Terpolymere, Styrol-N-Phenylmaleinimid-Maleinsäureanhydrid-Terpolymere und Polymere mit Methylmethacrylat-Maleinsäureanhydrid Gehalt (siehe zum Beispiel EP-A 0 946 644).

In der Regel reagieren die Amino- bzw. Carboxylendgruppen der Polyamide mit den funktionellen Gruppen der genannten Co- und Terpolymere, wobei in situ Copolymere entstehen, welche für die verbesserte Verträglichkeit zwischen der Styrolcopolymer-Phase und der Polyamid-Phase sorgen. Solche Polymermischungen mit modifizierter Grenzfläche werden im Allgemeinen als Polymerlegierungen bezeichnet, siehe zum Beispiel die Darstellung von L.A. Utracki, "Polymer Alloys and Blends", Hanser Publishers, München Vienna New York, 1989.

Die bisher bekannten Styrolcopolymer/Polyamid PA 6-Formmassen weisen - wie auch andere Polymerblends - eine große Anisotropie der Schlagzähigkeit auf. Werden zum Beispiel in einer Versuchsreihe Probekörper aus großen Bauteilen parallel bzw. senkrecht zur Fließrichtung ausgearbeitet, so treten zum Teil große Unterschiede bezüglich der Schlagzähigkeit auf. Diese mechanische Anisotropie kann bei der Verwendung der Formteile zu erheblichen Nachteilen führen z. B. zu Rissen bzw. Bruchstellen im Formteil.

Eine Aufgabe der vorliegenden Erfindung ist es daher, thermoplastische Formmassen auf Basis von Styrol-Copolymeren und Polyamiden mit reduzierter Anisotropie der Schlagzähigkeit zur Verfügung zu stellen.

Überraschenderweise kann diese Aufgabe durch die Bereitstellung einer thermoplastischen Formmasse gelöst werden, enthaltend die Komponenten A, B, C und D, sowie gegebenenfalls die weiteren Komponenten E, F, G und H, deren Summe insgesamt 100 Gew.-% ergibt.

Die erfindungsgemäße Formmasse enthält:
a) 3 bis 91,9 Gew.-% eines oder mehrerer Styrolcopolymere A,
b) 3 bis 91 Gew.-% eines oder mehrerer Polyamide B,
c) 5 bis 50 Gew.-% eines oder mehrerer Pfropfpolymerisate C
d) 0,1 bis 25 Gew.-% eines oder mehrerer Terpolymere D, wobei diese einen Oligomerenanteil von kleiner als 3 Gew.-% aufweisen, sowie
e) 0 bis 40 Gew.-% eines weiteren Kautschuks E,
f) 0 bis 3 Gew.-% eines mindestens monofunktionellen Anhydrids F mit einem Molgewicht von kleiner 3000 g/mol;
g) 0 bis 50 Gew.-% an faser- und/oder teilchenförmigen Füllstoffen G,
h) 0 bis 40 Gew.-% weiterer Zusatzstoffe H.

Bevorzugt wird eine Formmasse bereitgestellt, die von 10 bis 60 Gew.-% eines oder mehrerer Styrolcopolymere A enthält, wobei dieses Styrol-Copolymer A bevorzugt aus zwei oder mehreren Monomeren aus der Gruppe Styrol, Acrylnitril, alpha-Methylstyrol und Methylmetacrylat aufgebaut ist.

Als erste Komponente A enthalten die erfindungsgemäßen thermoplastischen Formmassen 3 bis 91,9 Gew.-%, insbesondere 10 bis 60 Gew.-%, bevorzugt 12 bis 50 Gew.-% mindestens eines Styrolcopolymeren A.

Als Styrolcopolymere können insbesondere SAN oder andere kautschukfreie Styrolcopolymere verstanden werden. Beispiele für die Komponente A sind gängige Copolymermatrices wie z. B. durch Massepolymerisation, Emulsions- oder Lösungsmittelpolymerisation hergestellte Styrol-Acrylnitril-Copolymere. Auch Mischungen von Matrices sind geeignet, beispielsweise die in Ulmann's Encyclopedia of Industrial Chemistry (VCH-Verlag, 5. Ausgabe, 1992, S. 633 f.) beschrieben.

In einer weiteren Ausführungsform der Erfindung wird eine Formmasse hergestellt, die eines oder mehrerer Styrolcopolymere A enthält, wobei dieses Styrol-Copolymer A aus zwei oder drei Monomeren aus der Gruppe Styrol, Acrylnitril und/oder alpha-Methylstyrol aufgebaut ist. Die Copolymer-Matrix A wird vorzugsweise aus den Komponenten Acrylnitril und Styrol und/oder α-Methylstyrol durch Massepolymerisation oder in Gegenwart eines oder mehrerer Lösungsmittel hergestellt. Bevorzugt sind dabei Copolymere A mit Molmassen M_{w} von 15.000 bis 300.000 g/mol, wobei die Molmassen z. B. durch Lichtstreuung in Tetrahydrofuran bestimmt werden können (GPC mit UV-Detektion).

Die Copolymer-Matrix A kann z. B. enthalten:
(Aa) Polystyrolacrylnitril, hergestellt aus, bezogen auf (Aa), 60 bis 85 Gew.-% Styrol und 15 bis 40 Gew.-% Acrylnitril, oder
(Ab) Poly-α-Methylstyrolacrylnitril, hergestellt aus, bezogen auf (Ab), 60 bis 85 Gew.-% α-Methylstyrol und 15 bis 40 Gew.-% Acrylnitril, oder
(Ac) eine Mischung der Copolymer-Matrix (Aa) und der Copolymer-Matrix (Ab).

Die Copolymer-Matrix A kann auch durch Copolymerisation von Acrylnitril, Styrol und α-Methylstyrol gewonnen werden.

Das zahlengemittelte Molekulargewicht (Mₙ) der Copolymer-Matrix A beträgt vorzugsweise von 15.000 bis 150.000 g/mol (bestimmt mittels GPC mit UV-Detektion).

Die Viskosität (VZ) der copolymeren Matrix A beträgt (gemessen nach DIN 53726 bei 25°C in einer 0,5 gew.-%igen Lösung in DMF) z. B. von 50 bis 120 ml/g. Durch Massepolymerisation bzw. Lösungspolymerisation in z.B. Toluol oder Ethylbenzol kann die Copolymer-Matrix A hergestellt werden nach einem Verfahren, wie es beispielsweise im Kunststoff-Handbuch, Vieweg-Daumiller, Band V, (Polystyrol), Carl-Hanser-Verlag, München 1969, Seiten 122 f., Zeilen 12 ff. beschrieben wird.

Die erfindungsgemäße Formmasse enthält ferner 3 bis 91 Gew.-%, bevorzugt von 30 bis 80 Gew.-%, insbesondere von 30 bis 60 Gew.%, eines oder mehrerer Polyamide B, wobei es sich um Homopolyamide, Copolyamide oder Mischungen daraus handeln kann.

Dabei kann das Polyamid B z. B. aus den Monomeren aus der Gruppe aufgebaut sein: Terephtalsäure, Adipinsäure, Hexamethylendiamin, Ethylendiamin, Phenylendiamin und/oder ε-Caprolactam aufgebaut sein. Auf die Komponente B und deren Herstellung wird später noch genauer eingegangen.

In einer weiteren Ausführungsform der Erfindung wird eine Formmasse hergestellt, die 5 bis 50 Gew.-%, bevorzugt 10 bis 40 Gew.-% eines oder mehrerer Pfropfpolymerisate C enthält. Dieses Pfropfpolymerisat C ist vorzugsweise aus einer Pfropfgrundlage und mindestens einer Pfropfauflage aufgebaut.

Das Pfropfpolymerisat C ist z. B. aus zwei oder mehreren Monomeren aus der Gruppe Butadien, Styrol, Acrylnitril, alpha-Methylstyrol, Methylmethacrylat, Ethylacrylat und/oder Methylacrylamid aufgebaut. Zur Erläuterung des Pfropfpolymerisats C und seiner Herstellung wird auf die Beschreibung in Ullmann's Encyclopedia of Industrial Chemistry 5. Auflage, VCH, 1992, Seiten 633f. verwiesen.

Bevorzugter Weise enthält die Formmasse 10 bis 40 Gew.-% eines oder mehrerer Pfropfpolymerisate C, wobei dieses Pfropfpolymerisat C aus einer Pfropfgrundlage aus Polybutadien (oder zum Beispiel einem Butadien-enthaltenden Copolymer) und mindestens einer Pfropfauflage aufgebaut ist. Die Pfropfauflage ist vorzugsweise aus zwei oder mehrere Monomeren aus der Gruppe Styrol, Acrylnitril, alpha-Methylstyrol, Ethylacrylat und/oder Methylacrylamid aufgebaut. Auf die Komponente C und deren Herstellung wird später genauer eingegangen.

In einer weiteren Ausführungsform der Erfindung wird eine Formmasse hergestellt, die 1 bis 25 Gew.-%, insbesondere 1 bis 15 Gew.-% eines Terpolymeren D enthält, wobei dieses Terpolymere D einen Oligomerenanteil von kleiner als 4 Gew.-%, insbesondere kleiner als 3 Gew.-% und bevorzugt kleiner als 2,5 Gew.-% aufweist.

Unter Oligomeren werden dabei alle Verbindungen verstanden, die eine Molmasse (M_{w}) von kleiner 10.000 g pro Mol aufweisen, wobei auch die Restmonomere als Oligomere gelten. Die Bestimmung der Molmasse kann dabei nach gängigen Methoden erfolgen.

Das Terpolymere D ist häufig aus drei oder mehreren Monomeren insbesondere aus der Gruppe Styrol, Acrylnitril, alpha-Methylstyrol, Methylmetacrylat, Maleinsäureimide und/oder Maleinsäureanhydrid aufgebaut. Die Formmasse enthält in einer weiteren Ausführungsform der Erfindung von 1 bis 15 Gew.-%, insbesondere 2 bis 10 Gew.-% eines Terpolymeren D, wobei dieses Terpolymere D einen Oligomerenanteil von kleiner als 3 Gew.-% aufweist und wobei das Terpolymer D im Wesentlichen aus den Monomeren Styrol, Acrylnitril und Maleinsäureanhydrid bzw. Maleinsäureimiden aufgebaut ist. Auf die Komponente D und deren Herstellung wird später genauer eingegangen.

In einer weiteren Ausführungsform der Erfindung enthält die Formmasse eine oder mehrere zusätzliche Komponenten E, F, G und/oder H.

Die Formmasse kann z. B. zusätzlich 0 bis 40 Gew.-%, insbesondere 1 bis 30 Gew.-% weiterer Kautschuke E enthalten, wobei dieser weitere Kautschuk E z.B. aus zwei oder mehreren Monomeren, vorzugsweise aus der Gruppe Butadien, Isopren, Styrol, Acrylnitril, alpha-Methylstyrol, Methylmetacrylat, Butylacrylat und/oder Ethylhexylacrylat aufgebaut ist. Auch funktionalisierte Kautschuke z.B. auf Basis von Ethen und C₃-C₈-Olefinen sind als Komponente E verwendbar.

Vorzugsweise besteht der weitere Kautschuk E aus Monomeren der Gruppe: Styrol, Acrylnitril, alpha-Methylstyrol, Methylmetacrylat und/oder Butylacrylat oder er enthält Monomere aus dieser Gruppe.

In einer weiteren Ausführungsform der Erfindung wird eine Formmasse hergestellt, die zusätzlich 0 bis 3 Gew.-%, insbesondere 0,1 bis 2 Gew.-% eines mindestens monofunktionellen Anhydrids F mit einem Molgewicht von kleiner 3000 g/mol, insbesondere kleiner 1000 g/mol enthält. Als Anhydrid F kommen zum Beispiel die Verbindungen Phthalsäureanhydrid, Benzoesäureanhydrid und/oder Chlorphthalsäureanhydrid in Frage.

In einer weiteren Ausführungsform der Erfindung wird eine Formmasse hergestellt, die zusätzlich 0 bis 50 Gew.-%, insbesondere 5 bis 40 Gew.-% an faser- und/oder teilchenförmigen Füllstoffen G (wie z. B. Talkum, Kaolin oder Glimmer) enthält.

In einer weiteren Ausführungsform der Erfindung wird eine Formmasse hergestellt, die zusätzlich 0 bis 40 Gew.-%, insbesondere 2 bis 30 Gew.-% weiterer Zusatzstoffe H aus der weiter unten beschriebenen Gruppe (wie Stabilisatoren) enthält.

Gegenstand der Erfindung ist auch eine Formmasse, die folgende Komponenten enthält:
a) 3 bis 91,9 Gew.-% eines Styrolcopolymeren A aus Styrol und Acrylnitril,
b) 3 bis 91 Gew.-% eines Polyamids B,
c) 5 bis 50 Gew.-% eines Pfropfpolymerisats C aus
   c1) 40 bis 80 Gew.-% einer Pfropfgrundlage aus einem kautschukelastischen Polymeren C1 auf der Basis von Alkylacrylaten mit 1 bis 8 C-Atomen im Alkylrest, Ethylen/Propylen, Dienen oder Siloxanen und mit einer Glasübergangstempreatur von unter 0°C,
   c2) 20 bis 60 Gew.-% einer Pfropfauflage C2 aus
   c21) 60 bis 90 Gew.-% Styrol oder alpha-Methylstyrol und
   c22) 5 bis 40 Gew.-% mindestens eines ungesättigten Nitrils C22,
d) 0,1 bis 25 Gew.-% eines Terpolymeren D mit einem Oligomerenanteil (Mw kleiner 10000 g/mol) von kleiner als 3 Gew.-%, aus den Bestandteilen
   d1) 60 bis 85 Gew-.% Styrol oder alpha-Methyl-Styrol oder deren Mischungen und
   d2) 15 bis 40 Gew.-% Acrylnitril,
   d3) 0,1 bis 5 Gew.-%, vorzugsweise 0,5 bis 4 Gew.-% Maleinsäureanhydrid;
e) 0 bis 40 Gew.-% weiterer Kautschuke E,
f) 0 bis 3 Gew.-% eines mindestens monofunktionellen Anhydrids F mit einem Molgewicht von kleiner 3000 g/mol;
g) 0 bis 50 Gew.-% an Faser- oder teilchenförmigen Füllstoffen G,
h) 0 bis 40 Gew.-% weiterer Zusatzstoffe H.

In einer weiteren Ausführungsform der Erfindung wird eine Formmasse hergestellt, bei der die Komponente A aus 60 bis 85 Gew.-% Styrol und 15 bis 40 Gew.-% Acrylnitril aufgebaut ist.

In einer weiteren Ausführungsform der Erfindung wird eine Formmasse eingesetzt, die als Komponente C einen Pfropfkautschuk enthält, wobei mindestens 90 Gew.-% der Teilchen der Pfropfgrundlage einen Durchmesser von weniger als 450 nm aufweisen.

Gegenstand der vorliegenden Erfindung ist auch ein Verfahren zur Herstellung von Formmassen, wie sie oben beschrieben werden, durch Mischen der Komponenten A bis D und gegebenenfalls der Komponenten E bis H. Dabei können gängige Vorrichtungen wie Extruder verwendet werden.

Die Erfindung betrifft auch die Verwendung der oben beschriebenen Formmassen zur Herstellung von Fasern, Folien und Formkörpern. Die Verwendung beinhaltet auch die Herstellung von Haushaltsartikeln, elektronische Bauteilen, Haushaltsgeräten, Gartengeräten, medizinisch-technische Geräten, Kfz-Bauteilen und Karosserieteilen.

Ein weiterer Gegenstand der Erfindung sind Formkörper, Fasern und Folien hergestellt aus einer Formmasse wie oben beschrieben.

Während die Formmassen als erste Komponente eine Styrol-Copolymer-Matrix enthalten, enthalten sie als zweite Komponente vorzugsweise 3 bis 91 Gew.-%, insbesondere von 30 bis 80 Gew.-% eines thermoplastischen Polyamids B.

Die als Komponente B in den Formmassen enthaltenen Polyamide sind ebenfalls bekannt. Beispiele sind teilkristalline und amorphe Polyamidharze mit einem Molekulargewicht (Gewichtsmittelwert) von mindestens 5000, die gewöhnlich als Nylon bezeichnet werden. Solche Polyamide sind zum Beispiel in den älteren Patenten US 2,071,250; US 2,071,251; US 2,130,523; US 2,130,948; US 2,241,322; US 2,312,966; US 2,512,606 und US 3,393,210 beschrieben.

Die Polyamide B können zum Beispiel durch Kondensation äquimolarer Mengen einer gesättigten oder einer aromatischen Dicarbonsäure, beispielsweise mit 4 bis 12 Kohlenstoffatomen, mit einem gesättigten oder aromatischen Diamin, welches z.B. 2 bis 14 Kohlenstoffatome aufweist, oder durch Kondensation von ω-Aminocarbonsäuren bzw. durch Polyaddition von entsprechenden Lactamen hergestellt werden.

Beispiele für derartige Polyamide sind unter anderem die bekannten Strukturen:
Polyhexamethylenadipinsäureamid (Nylon 66),
Polyhexamethylenazelainsäureamid (Nylon 69),
Polyhexamethylensebacinsäureamid (Nylon 610),
Polyhexamethylendodecandisäureamid (Nylon 612),
sowie die durch Ringöffnung von Lactamen erhaltenen Polyamide wie Polycaprolactam, Polylaurinsäurelactam, Poly-11-aminoundecansäure und ein Polyamid aus Di(p-aminocyclohexyl)-methan und Dodecandisäure.

Es ist auch möglich, Polyamide zu verwenden, die durch Copolykondensation von zwei oder mehr der oben genannten Polymeren oder ihrer Komponenten hergestellt worden sind, zum Beispiel Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolyamide enthalten 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäure kann durch Isophthalsäure oder andere aromatische Dicarbonsäuren, vorzugsweise solche, in denen die Carboxylgruppen in para-Stellung stehen, ersetzt werden:

Als Monomere für die Polyamidkomponente B kommen auch cyclische Diamine in Betracht wie die Verbindungen der allgemeinen Formel (V) 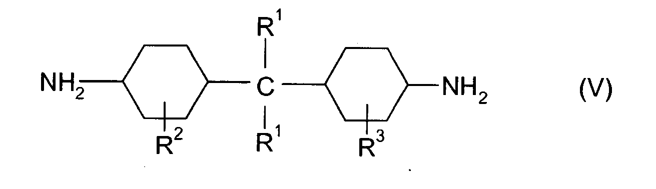 in welcher
- R¹: Wasserstoff oder eine C₁-C₄-Alkylgruppe,
- R²: eine C₁-C₄-Alkylgruppe oder Wasserstoff und
- R³: eine C₁-C₄-Alkylgruppe oder Wasserstoff bedeuten.

Besonders bevorzugte Diamine (V) sind Bis(4-aminocyclohexyl)-methan, Bis(4-amino-3-methylcyclohexyl)methan, Bis(4-aminocyclohexyl)-2,2-propan oder Bis(4-amino-3-methylcyclohexyl)-2,2-propan.

Als weitere Diamine (V) seien 1,3- oder 1,4-Cyclohexandiamin oder Isophorondiamin genannt. Als weiteres Diamin sei das m-Xylylendiamin genannt.

Neben den Einheiten, die sich von Terephthalsäure und Hexamethylendiamin ableiten, enthalten die teilaromatischen Copolyamide häufig Einheiten, die sich von ε-Caprolactam ableiten und/oder Einheiten, die sich von Adipinsäure und Hexamethylendiamin ableiten.

Der Anteil an Einheiten, die sich von ε-Caprolactam ableiten, beträgt bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten. In diesem Fall ist darauf zu achten, dass der Anteil an Einheiten, die frei von aromatischen Gruppen sind, mindestens 10 Gew.-% beträgt, vorzgusweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung. Als vorteilhaft für viele Anwendungszwecke haben sich Polyamide B mit 50 bis 80, insbesondere 60 bis 75 Gew.-% Einheiten, die sich von Terephthalsäure und Hexamethylendiamin ableiten, und 20 bis 50, vorzugsweise 25 bis 40 Gew.-% Einheiten, die sich von ε-Caprolactam ableiten, erwiesen.

Die Herstellung der teilaromatischen Copolyamide kann zum Beispiel nach den in EP-A 129 195 und EP-A 129 196 beschriebenen Verfahren erfolgen.

Weitere teilaromatische Polyamide sind solche, die einen Gehalt an Triamineinheiten, insbesondere Einheiten des Dihexamethylentriamins von unter 0,5 Gew.-% aufweisen. Bevorzugt werden solche teilaromatischen Polyamide mit Triamingehalten von 0,3 Gew.-% oder weniger. Bevorzugt werden lineare Polyamide mit einem Schmelzpunkt über 200°C.

Weitere Polyamide sind zum Beispiel Polyhexamethylenadipinsäureamid, Polyhexamethylensebacinsäureamid, Polycaprolactam, Polyamid 6/6T und Polyamid 66/6T sowie Polyamide, die cyclische Diamine als Comonomere enthalten. Auch das Polyamid 9T ist geeignet. Die Polyamide weisen im Allgemeinen eine relative Viskosität von 2,0 bis 5 auf, bestimmt an einer 1 Gew.-%igen Lösung in 96 %iger Schwefelsäure bei 23°C, was einem Molekulargewicht (Zahlenmittel) von etwa 15000 bis 45000 entspricht. Polyamide mit einer relativen Viskosität von 2,4 bis 3,5, insbesondere 2,5 bis 3,4 werden bevorzugt verwendet. Außerdem können als Komponente B Polyamide eingesetzt werden, die zum Beispiel durch Kondensation von 1,4-Diaminobutan mit Adipinsäure unter erhöhter Temperatur erhältlich sind (Polyamid 4,6). Herstellungsverfahren für Polyamide dieser Struktur sind zum Beispiel in EP-A 0 38 094, EP-A 0 38 582 und EP-A 0 39 524 beschrieben.

Der Anteil der Polyamide B an den erfindungsgemäßen Formmassen kann 3 bis 91, vorzugsweise 30 bis 80 und insbesondere 30 bis 60 Gew.-% betragen.

Erfindungsgemäß sind auch folgende Polyamide als Polyamidkomponente B einsetzbar, die im Wesentlichen aufgebaut sind aus:
b₁) 30 bis 44, vorzugsweise 32 bis 40 und insbesondere 32 bis 38 mol-% Einheiten, welche sich von Terephthalsäure ableiten,
b₂) 6 bis 20, vorzugsweise 10 bis 18 und insbesondere 12 bis 18 mol-% Einheiten, welche sich von Isophthalsäure ableiten,
b₃) 43 bis 49,5 vorzugsweise 46 bis 48,5 und insbesondere 46,3 bis 48,2 mol-% Einheiten, welche sich von Hexamethylendiamin ableiten,
b₄) 0,5 bis 7, vorzugsweise 1,5 bis 4 und insbesondere 1,8 bis 3,7 mol-% Einheiten, welche sich von aliphatischen cyclischen Diaminen mit 6 bis 30, vorzugsweise 13 bis 29 und insbesondere 13 bis 17 C-Atomen ableiten,
b₅) 0 bis 4 mol-% an weiteren, von b₁) bis b₄) verschiedenen polyamidbildenden Monomeren,
wobei die Molprozente der Komponenten b₁) bis b₅) zusammen 100 % ergeben.

Die Diamineinheiten b₃) und b₄) werden vorzugsweise etwa äquimolar mit den Dicarbonsäureeinheiten b₁) und b₂) umgesetzt.

Geeignete Monomere b₄) sind vorzugsweise cyclische Diamine der Formel 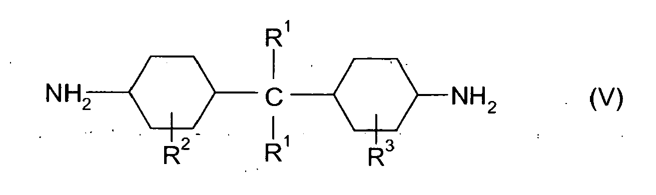 in der
- R¹: Wasserstoff oder eine C₁-C₄-Alkylgruppe,
- R²: eine C₁-C₄-Alkylgruppe oder Wasserstoff und
- R³: eine C₁-C₄-Alkylgruppe oder Wasserstoff bedeuten.

Bevorzugte Diamine b₄) sind zum Beispiel Bis(4-aminocyclohexyl)-methan, Bis(4-amino-3-methylcyclohexyl)methan, Bis(4-aminocyclohexyl)-2,2-propan oder Bis(4-amino-3-methylcyclohexyl)-2,2-propan Als weitere Monomere b₄) seien 1,3-, 1,4-Cyclohexandiamin oder Isophorondiamin genannt.

Neben den vorstehend beschriebenen Einheiten b₁) bis b₄) können die Polyamide B bis zu 4, vorzugsweise bis zu 3,5 Gew.-% an polyamidbildenden Monomeren b₅) enthalten.

Aromatische Dicarbonsäuren als Komponente b₅) weisen im Allgemeinen 8 bis 16 Kohlenstoffatome auf. Geeignete aromatische Dicarbonsäuren sind beispielsweise substituierte Terephthal- und Isophthalsäuren wie 3-t-Butylisophthalsäure, mehrkernige Dicarbonsäuren, zum Beispiel 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4- oder 2,6-Naphthalindicarbonsäure und Phenoxyterephthalsäure.

Weitere polyamidbildende Monomere b₅) können sich zum Beispiel von Dicarbonsäuren mit 4 bis 16 Kohlenstoffatomen und aliphatischen Diaminen mit 4 bis 16 Kohlenstoffatomen und aliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelaninsäure oder Sebacinsäure als Vertreter der aliphatischen Dicarbonsäuren, 1,4-Butandiamin, 1,5-Pentandiamin oder Piperazin, als Vertreter der Diamine und Caprolactam, Capryllactam, Önanthalactam, Laurinlactam und ω-Aminoundecansäure als Vertreter von Lactamen bzw. Aminocarbonsäuren genannt.

Die Schmelzpunkte der Polyamide B liegen bevorzugt über 200°C und in der Regel im Bereich von 290 bis 340°C, bevorzugt von 292 bis 330°C, wobei dieser Schmelzpunkt mit einer hohen Glasübergangstemperatur von in der Regel mehr als 120°C, insbesondere mehr als 130°C (im trockenen Zustand) verbunden ist.

Bei den Polyamiden B werden erfindungsgemäß solche bevorzugt verwendet, die einen Kristallinitätsgrad > 30 %, bevorzugt > 35 %, und insbesondere > 40 % aufweisen. Der Krisitallinitätsgrad ist ein Maß für den Anteil an kristallinen Fragmenten im Copolyamid und wird durch Röntgenbeugung oder indirekt durch Messung ΔH_{krist.} bestimmt.

Es können auch Mischungen von verschiedenen Polyamiden als Komponente B in den erfindungsgemäßen Formmassen eingesetzt werden, wobei das Mischungsverhältnis weitgehend beliebig ist.

Geeignete Verfahren zur Herstellung der Polyamide sind dem Fachmann bekannt.
Als eine bevorzugte Herstellweise sei der Batch-Prozess als diskontinuierliche Herstellweise genannt. Dabei wird die wässrige Monomerenlösung innerhalb 0,5 bis 3 Stunden in einem Autoklaven auf Temperaturen von 280 bis 340°C erhitzt, wobei ein Druck von 10 bis 50, insbesondere 15 bis 40 bar erreicht wird, der durch Entspannen von überschüssigem Wasserdampf möglichst konstant bis zu 2 Stunden gehalten wird. Anschließend entspannt man den Autoklaven bei konstanter Temperatur innerhalb eines Zeitraumes von 0,5 bis 2 Stunden, bis man einen Enddruck von 1 bis 5 bar erreicht hat. Anschließend wird die Polymerschmelze ausgetragen, abgekühlt und granuliert. Ein anderes Verfahren erfolgt in Anlehnung an die in EP-A 129 195 und EP-A 129 196 beschriebenen Verfahren.

Als Komponente C enthalten die thermoplastischen Formmassen mindestens einen Pfropfkautschuk, wobei diese Pfropfkautschuke vorzugsweise von 5 bis 50 Gew.-%, insbesondere 10 bis 40 Gew.-% der Formmassen ausmachen. Unter Pfropfkautschuken im Sinne der Erfindung werden Kern-Schale-Kautschuke verstanden, die auch mehrschalig aufgebaut sein können. Bevorzugt werden Pfropfkautschuke, die als Kern (Pfropfgrundlage) eine Komponente mit einer Glasübertragungstemperatur Tg von weniger als -20°C, vorzugsweise weniger als -40°C aufweisen. Geeignet sind Kautschuke zum Beispiel auf Dien-, Acrylat-, Silicon- und EPDM-Basis.

Die Pfropfhülle (Pfropfauflage) besteht vorzugsweise aus Styrol, Acrylnitril und/oder anderen copolymerisierbaren Monomeren. Das Verhältnis von Hart- zu Weichphase liegt häufig zwischen 20 zu 60 und 70 zu 30 Gewichtsteilen.

Die Herstellung dieser Pfropfkautschuke kann zum Beispiel aus DE-A 38 43 371 oder DE-22 44 519 entnommen werden. Aus EP-A 022 200 ist es bereits bekannt, thermoplastische Formmassen herzustellen, die eine Copolymer-Matrix aus Styrol und Acrylnitril sowie ein Pfropfcopolymerisat aus einem Kautschuklatex, Styrol und Acrylnitril enthalten. Dabei wird zunächst ein Polybutadien-Latex durch radikalische Polymerisation unter Einsatz von Kaliumperoxodisulfat als Initiator hergestellt. Dieser Kautschuklatex wird dann einer Agglomeration unterzogen, die dazu dient, die Kautschukpartikel zu vergrößern. Diese Agglomeration kann beispielsweise durch eine Umsetzung des Kautschuklatex mit einer Emulsion eines Copolymeren aus Ethylacrylat und Methacrylsäureamid erfolgen. Anschließend erfolgt die Herstellung des Pfropfkautschuks dann durch Umsetzung des agglomerierten Kautschuklatex mit Styrol und Acrylnitril unter Einsatz eines Initiators.

Dem Fachmann ist ferner bekannt, dass die Größe der Kautschukpartikel einen wesentlichen Einfluss auf die physikalischen Eigenschaften der thermoplastischen Formmassen hat. Aus produktionstechnischen Gründen kann es sich als vorteilhaft erweisen, zunächst einen Kautschuklatex mit einer kleinen Partikelgröße der Kautschukteilchen herzustellen und in einem anschließenden Schritt durch ein Verfahren der Agglomeration die Partikelgröße der Kautschukteilchen zu vergrößern. In EP-A 077 038 wird z. B. die Agglomeration eines dispergierten Kautschuks in Gegenwart einer Dispersion eines Säuregruppen enthaltenen Latex sowie in Gegenwart eines neutralen Elektrolyten beschrieben. Aus EP-A 714 941 ist ein Verfahren zur mechanischen Agglomeration von Kautschukpartikeln bekannt, das sich jedoch im technischen Maßstab nur mit großem Aufwand realisieren lässt.

Die erfindungsgemäßen thermoplastischen Formmassen enthalten ein Pfropfpolymerisat C, das bevorzugt auf einem Kautschuklatex, insbesondere einem Butadien-Latex, und weiteren kostengünstig verfügbaren Monomeren, insbesondere Acrylnitril, Styrol und/oder Methylstyrol basiert.

Die erfindungsgemäßen Formmassen enthalten zum Beispiel neben einer Copolymer-Matrix A (im Wesentlichen aus Acrylnitril, Styrol und/oder α-Methylstyrol) auch 5 bis 50 Gew.-% eines Pfropfpolymerisats C, der aus einer Pfropfgrundlage (C1) und einer Pfropfhülle (C2) aufgebaut ist.

Gegenstand der Erfindung ist auch ein Verfahren zur Herstellung einer thermoplastischen Formmasse, bei dem man z. B.
a) durch Massepolymerisation oder Lösungsmittelpolymerisation die thermoplastische Copolymerkomponente A herstellt,
b) durch Polykondensation die Polyamidkomponente B herstellt,
c) durch z. B. Emulsionspolymerisation unter Verwendung eines Initiators, z. B. eines Redox-Initiatorsystems, das Pfropfcopolymerisat C herstellt,
d) durch Polymerisation das Terpolymer D herstellt, und
e) die Komponenten A bis D sowie gegebenenfalls die weitere Komponenten E bis H miteinander mischt.

Das Pfropfpolymer C ist z. B. erhältlich aus:
(C1): 55 bis 70 Gew.-%, bezogen auf das Pfropfcopolymer C, einer Pfropfgrundlage (C1), erhältlich durch die Umsetzung von Styrol, Butadien, und einer copolymerisierbaren, polyfunktionellen, agglomerierend wirkenden Komponente; und
(C2): 30 bis 45 Gew.-%, bezogen auf das Pfropfcopolymer C, einer Pfropfhülle erhältlich durch Umsetzung der Pfropfgrundlage (C1) mit einer Mischung von z.B. Styrol und Acrylnitril.

Die Pfropfcopolymerkomponente C hat einen komplexen Aufbau und ist z. B. aufgebaut aus 40 bis 80 Gew.-%, bezogen auf C, einer Pfropfgrundlage (C1) und zu 20 bis 60 Gew.-% aus einer Pfropfhülle (C2), wobei die Gew.-%-Angaben jeweils auf das Gesamtgewicht der Komponente C bezogen sind.

Die Pfropfgrundlage (C1) kann zum Beispiel erhalten werden durch Umsetzung von 0 bis 10 Gew.-% Styrol und 90 bis 100 Gew.-% Butadien sowie 0,01 bis 5 Gew.-% an Hilfskomponenten, wobei die Gew.-%-Angaben sich auf die Pfropfgrundlage (C1) beziehen.

Die Pfropfhülle (C2) kann erhalten werden durch Umsetzung von 60 bis 90 Gew.-% an Styrol und 5 bis 40 Gew.-% Acrylnitril sowie 0,01 bis 5 Gew.-% an Hilfskomponenten (Gew. % bezogen auf die Pfropfhülle C2) in Gegenwart der Pfropfgrundlage (C1).

Die thermoplastische Formmasse enthält vorzugsweise mindestens ein Pfropfpolymerisat C mit einen Kautschukgehalt von 20 bis 80 Gew.-%. Die Formmasse kann auch zwei oder mehr verschiedene Pfropfpolymerisate als Komponente C enthalten.

Zur Herstellung des Pfropfpolymerisats C wird z. B. ein Initiator wie Peroxodisulfat oder aber ein Redox-Initiatorsystem, insbesondere enthaltend ein organisches Peroxid sowie mindestens ein Reduktionsmittel eingesetzt.

Als organisches Peroxid wird bevorzugt eine Verbindung ausgewählt aus der Gruppe: Di-tert.-butylperoxid, Cumolhydroperoxid, tert.-Butylhydroperoxid und p-Menthanhydroperoxid oder Gemischen hieraus. Als Reduktionsmittel wird in der Regel mindestens eine wasserlösliche Verbindung mit reduzierender Wirkung verwendet, beispielsweise ein Zucker wie Dextrose.

In einer besonderen Ausführungsform der Erfindung wird zur Herstellung des Pfropfcopolymers C ein Redox-Initiatorsystem eingesetzt, enthaltend ein organisches Peroxid ausgewählt aus der Gruppe: Cumolhydroperoxid, p-Menthanhydroperoxid und Mischungen hieraus, sowie ein Reduktionsmittel ausgewählt aus der Gruppe: Salze von Sulfinsäure, Salze der schwefligen Säure, Natriumdithionit, Natriumsulfit, Natriumhyposulfit, Natriumhydrogensulfit, Ascorbinsäure sowie deren Salze, Rongalit C (Natriumformaldehydsulfoxylat), Mono- und Dihydroxyaceton, Zucker, Eisen(II)salze, Zinn(II)salze und Titan(III)salze.

Zur Herstellung des Pfropfpolymerisats C wird bevorzugt eine Emulsionspolymerisation unter Verwendung eines Redox-Initiatorsystem enthaltend Cumolhydroperoxid, Dextrose sowie Eisen(II)salz durchgeführt. Vorzugsweise wird Cumolhydroperoxid zusammen mit Cumol eingesetzt, wobei das Verhältnis vorzugsweise von 20 : 1 bis etwa 1 : 10 sein kann. Vorzugsweise wird das Cumolhydroperoxid kontinuierlich während der Pfropfpolymerisation zugeführt, insbesondere als Mischung mit Cumol.

Zur Herstellung der Pfropfgrundlage (C1) wird bevorzugt eine Emulsionspolymerisation unter Einsatz von Kaliumperoxodisulfat als Initiator durchgeführt.

Geeignete Herstellungsverfahren für die Pfropfcopolymerisate C sind zum Beispiel die Emulsionspolymerisation, Lösungspolymerisation, Suspensionspolymerisation oder Massepolymerisation, wobei die Pfropfcopolymerisate C vorzugsweise durch wässrige radikalische Emulsionspolymerisation hergestellt werden. Geeignete Polymerisationsverfahren werden unter anderem beschrieben in WO-A 2002/10222, DE-A 28 26 925 sowie in EP-A 022 200.

Bei der Polymerisation der Hartphase entstehen häufig auch untergeordnete Mengen ungepfropfter Anteile. Diese werden der Hartphase zugerechnet. Es können auch Mischungen verschiedener Kautschuke (zum Beispiel mit verschiedenen Teilchengrößenverteilungen) verwendet werden.

Als weitere Komponente enthalten die erfindungsgemäßen Formmassen ferner 0,1 bis 25 Gew.-% vorzugsweise von 1 bis 25 Gew.-% eines oder mehrerer Terpolymeren D, zum Beispiel auf Basis von vorzugsweise Styrol, Acrylnitril und Maleinsäureanhydrid.

Geeignete Terpolymere werden zum Beispiel in EP 784 080 sowie DE-A 100 24 935 beschrieben. Des Weiteren können auch andere Terpolymere wie Styrol-N-Phenylmaleinimid-Maleinsäureanhydrid-Terpolymere eingesetzt werden.

Geeignete Terpolymere als Komponente D enthalten zum Beispiel Einheiten d₁, die sich von aromatischen Vinylverbindungen (wie zum Beispiel Styrol) ableiten. Der Anteil der Einheiten d₁ beträgt (bezogen auf die Komponente D) häufig 20 bis 90 Gew.-%, insbesondere 40 bis 85 Gew.-%, bevorzugt 60 bis 85 Gew.-%.Ganz besonders bevorzugt enthalten die Terpolymeren D 60 bis 75 Gew.-% an d₁-Einheiten, die sich von aromatischen Vinylverbindungen ableiten.

Als aromatische Vinylverbindungen kommen vor allem Styrol und Styrolderivate in Betracht. Zu den geeigneten Styrolderivaten zählen α-Methylstyrol oder am aromatischen Kern substituierte Styrolderivate wie Vinyltoluol, t-Butylstyrol oder Chlorstyrol. Selbstverständlich können auch Mischungen unterschiedlicher aromatischer Vinylverbindungen eingesetzt werden. Ganz besonders bevorzugt wird Styrol verwendet.

Neben den Einheiten d₁ enthalten die Terpolymere D Einheiten d₃, die sich von cyclischen α,β-ungesättigten Dicarbonsäureanhydriden (wie MSA) ableiten. Deren Anteil beträgt in der Regel 0,1 bis 5, insbesondere 0,5 bis 4 Gew.-%. Bevorzugt beträgt der Anteil an d₃ von 0,6 bis 3 Gew.-%. Terpolymere D mit weniger als 0,1 Gew.-% und mehr als 5 Gew.-% d₃ wirken nicht als Verträglichkeitsvermittler. Terpolymere D mit wesentlich weniger als 0,1 Gew.-% an d₃, sind im Allgemeinen auch nicht hinreichend temperaturbeständig. Solche mit wesentlich mehr als 5 Gew.-% lassen sich häufig nicht mehr gut verarbeiten, da sie zu spröde sind.

Zu den bevorzugten cyclischen α,β-ungesättigten Dicarbonsäureanhydriden (d₃) zählen solche mit 2 bis 20 Kohlenstoffatomen. Die Doppelbindung kann sowohl exocyclisch als auch endocyclisch sein. Darunter sind Maleinsäureanhydrid, Methylmaleinsäureanhydrid oder ltakonsäureanhydrid besonders bevorzugt. Mischungen unterschiedlicher Dicarbonsäureanhydride können ebenfalls verwendet werden.

Ferner können die Terpolymere D noch 0 bis 40 Gew.-%, bevorzugt 5 bis 25 Gew.-% Einheiten d₂ enthalten, die sich von weiteren radikalisch polymerisierbaren Verbindungen ableiten. Beispielhaft seien hier Acrylsäure und Acrylsäurederivate wie Methacrylsäure, Acrylnitril, Methacrylnitril, Acrylsäurealkylester wie Acrylsäureethylester oder Methacrylsäureethylester genannt. Acrylnitril wird als Komponente d₂ bevorzugt verwendet.

Darüber hinaus können die Terpolymeren D Einheiten d₄ enthalten, die sich zum Beispiel von cyclischen α,β-ungesättigten Dicarbonsäureimiden ableiten. Diese sind im Allgemeinen von 0 bis 50 Gew.-% in den Terpolymeren D enthalten. Bevorzugte TerPolymere D enthalten 0 bis 49 Gew.-% an d₄.

Im Allgemeinen entsprechen die cyclischen α,β-ungesättigten Dicarbonsäureimide der Komponente d₄ den oben genannten Dicarbonsäureanhydriden d₃. Der Substituent am Stickstoff ist in der Regel ein Rest wie zum Beispiel ein C₁- bis C₂₀-Alkyl, C₄- bis C₂₀-Cycloalkyl, C₁- bis C₁₀-Alkyl-C₆- bis C₁₈-Aryl oder ein C₆- bis C₁₈-Arylrest.

Die Alkylreste können sowohl linear als auch verzweigt sein und mit einem oder mehreren Sauerstoffatomen unterbrochen sein, wobei die Sauerstoffatome nicht direkt mit den Stickstoffatomen und nicht direkt mit einem anderen Sauerstoffatom verknüpft sind. Zu diesen Alkylresten zählen Methyl, Ethyl, n-Propyl, i-Propyl, n-Butyl, i-Butyl, t-Butyl, n-Hexyl, n-Decyl und n-Dodecyl. Die Cycloalkylreste können sowohl unsubstituiert als auch substituiert sein. Geeignete Substituenten sind zum Beispiel Alkylgruppen wie Methyl oder Ethyl. Als Beispiele für Cycloalkylreste sind Cyclobutyl, Cyclopentyl, Cyclohexyl und p-Methylcyclohexyl zu nennen. Die Allkylgruppe der Alkylarylreste kann auch Substituenten haben. Beispiele derartiger Substituenten sind Alkylgruppen wie Methyl oder Ethyl aber auch Halogenatome wie Chlor oder Brom. Als Alkylarylreste können beispielsweise Benzyl, Ethylphenyl oder p-Chlorbenzyl verwendet werden. Ebenso können die Arylreste substituiert oder unsubstituiert sein, wobei zum Beispiel Alkylgruppen wie Methyl oder Ethyl oder Halogenatome wie Chlor oder Brom geeignete Substituenten sind. Zu den bevorzugten Arylresten zählen Phenyl und Naphthyl. Ganz besonders bevorzugte Reste sind Cyclohexyl oder Phenyl.

Die Terpolymeren D enthalten die Einheiten d₁ bis d₄ in einer statistischen Verteilung. In der Regel weisen die Terpolymeren D Molekulargewichte M_{w} (Gewichtsmittelwert) von 30 000 bis 500 000, bevorzugt 50 000 bis 250 000, insbesondere 70 000 bis 200 000 g/mol auf.

Die Terpolymeren D lassen sich zum Beispiel dadurch herstellen, dass man die entsprechenden Monomeren radikalisch polymerisiert. Dabei kann die Umsetzung sowohl in Suspension oder Emulsion als auch in Lösung oder Substanz durchgeführt werden, wobei letzteres bevorzugt wird. Die radikalische Reaktion lässt sich im Allgemeinen mit den üblichen Methoden initiieren wie Licht oder bevorzugt mit Radikalstartern wie Peroxiden, zum Beispiel Benzoylperoxid oder Cumolhydroperoxid.

Daneben können die Terpolymeren D wie beispielsweise in US 4,404,322 beschrieben dadurch hergestellt werden, dass zunächst die Komponenten d₁, d₃, und gegebenenfalls d₂ miteinander in einer radikalischen Reaktion umgesetzt werden und anschließend die in dem Reaktionsprodukt enthaltenen Anhydridgruppen teilweise mit entsprechenden primären Aminen oder Ammoniak in Imidgruppen überführt werden. Zu den primären Aminen zählen sowohl aliphatische als auch aromatische Amine. Geeignete primäre Amine sind beispielsweise C₁- bis C₂₀-Alkyl-, C₄- bis C₂₀-Cycloalkylamine, Amino-C₁- bis C₁₀-Alkylenaryle oder C₆- bis C₁₈-Arylamine. Die Alkylreste der primären Amine können sowohl linear als auch verzweigt sein und mit einem oder mehreren Sauerstoffatomen unterbrochen sein, wobei die Sauerstoffatome nicht direkt mit den Stickstoffatomen und nicht direkt mit einem anderen Sauerstoffatom verknüpft sind.

Zu diesen Alkylresten zählen Methyl, Ethyl, n-Propyl, i-Propyl, n-Butyl, i-Butyl, t-Butyl, n-Hexyl, n-Decyl und n-Dodecyl. Die Cycloalkylamine können sowohl unsubstituiert als auch substituiert sein. Geeignete Substituenten sind zum Beispiel Alkylgruppen wie Methyl oder Ethyl. Als Beispiele für Cycloalkylreste sind Cyclobutyl, Cyclopentyl, Cyclohexyl und p-Methylcyclohexyl zu nennen. Die Alkylgruppe der Aminoalkylenaryle kann sowohl linear als auch verzweigt sind und die Arylgruppe kann auch Substituenten tragen. Beispiele derartiger Substituenten sind Alkylgruppen wie Methyl oder Ethyl aber auch Halogenatome wie Chlor oder Brom.

Beispiele sind Aminophenylmethan, 1-Amino-2-phenylethan, 1-Amino-2-(p-chlorphenyl)ethan. Ebenso können die Arylamine substituiert oder unsubstituiert sein, wobei zum Beispiel Alkylgruppen wie Methyl oder Ethyl oder Halogenatome wie Chlor oder Brom geeignete Substituenten sind. Zu den bevorzugten Arylaminen zählen Anilin und Naphthylamine, zum Beispiel 2-Aminonaphthalin. Ganz besonders bevorzugt sind Cyclohexylamin oder Anilin.

Diese Reaktion wird zum Beispiel in Gegenwart eines tertiären Amins wie Trialkylamine oder Dialkylarylamine, zum Beispiel Triethylamin oder N,N-Diethylanilin als Katalysator bei Temperaturen von 80 bis 350°C ausgeführt.

Auch die in der EP-A 946 644 beschriebenen MMA/MSA-Copolymere sind im Prinzip als Komponente D geeignet.

Erfindungsgemäß werden solche Terpolymere eingesetzt, welche einen niedrigen Anteil niedermolekularer Bestandteile aufweisen. Die Bestimmung der niedermolekularen Anteile ist mittels GPC möglich. Erfindungsgemäß werden Terpolymere verwendet, welche im Molgewichtsbereich bis 10000 g/mol weniger als 4 Gew.-%, insbesondere weniger als 3 Gew.-% aufweisen (bestimmt mittels GPC, THF als Laufmittel, UV-Detektor). Die Herstellung solcher Terpolymere erfolgt vorzugsweise durch Lösungspolymerisation.

Als weitere Komponente können die erfindungsgemäßen thermoplastischen Formmassen einen weiteren Kautschuk E oder eine Mischung von Kautschuken enthalten. Geeignet sind Kautschuke mit Kern-Schale-Aufbau. Der Kautschukkern kann dabei zum Beispiel aus Dien (bevorzugt Butadien), Acrylaten (bevorzugt n-Butylacrylat, Ethylhexylacrylat), EPDM-Kautschuk oder Siloxan bestehen. Der Anteil des Kautschukkerns beträgt zwischen 40 und 90 Gew.-%. Die Glastemperatur des Kerns bevorzugt unter 0°C. Die Partikelgröße dieses Kautschuks soll 0,05 bis 10 µm, bevorzugt 0,1 bis 5 µm und insbesondere 0,15 bis 3 µm betragen. In der äußeren Schale können auch reaktive Gruppen vorhanden sein (Epoxy- bzw. Oxazolingruppen, Säure, Säureanhydrid, Ester).

Als Zähmodifier können auch Kautschuke E vom Typ Ethylencopolymere (Lupolen KR 1270, Hersteller BASF) oder funktionalisierte EP-Kautschuke oder SEBS-Blockkautschuke verwendet werden. Die verwendeten weiteren Kautschuke E weisen im Allgemeinen zwei wesentliche Merkmale auf: Sie enthalten einen elastomeren Anteil, der eine Glastemperatur von weniger als -10°C, vorzugsweise von weniger als - 30°C-aufweist, und sie enthalten mindestens eine funktionelle Gruppe, die mit der Polyamid-Komponente wechselwirken kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke E, die die Zähigkeit der Blends erhöhen, seien zum Beispiel Kautschuke aus Ethylen/Olefin (C₃-C₈) genannt, bevorzugt aus Propen, 1-Buten oder 1 Octen sowie EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie Cumolhydroperoxid auf das Polymere aufgepfropft werden.

Des Weiteren kommen auch funktionalisierte SBS oder SEBS-Blockcopolymere als Komponente E in Betracht.

Weiterhin seien als Kautschuk-Komponente E Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen. Die Copolymeren können in einem Hochdruckprozess bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.-%.

Als weitere Gruppe von als Komponente E geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein-Polymerisat mit einer Glastemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich i.a. von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem zum Beispiel die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier zum Beispiel Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich häufig von Styrol, α-Methylstyrol und deren Copolymerisaten ab, wobei hier als Comonomere vorzugsweise Acrylnitril, Methacrylnitril und Methylmethacrylat aufzuführen sind.

Als Komponente E bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazölin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tertiär-Butyl(meth)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1 : 9 bis 9 : 1, bevorzugt 3 : 7 bis 8 : 2. Derartige Kautschuke, die die Zähigkeit von Polyamiden erhöhen, sind an sich bekannt und beispielsweise in EP-A 208 187 beschrieben.

Als weitere Komponente enthalten die Formmassen gegebenenfalls 0 bis 3 Gew.-% eines monofunktionellen Anhydrids (F), vorzugsweise mit einem Molgewicht kleiner 3000 g/mol, beispielsweise Phthalsäureanhydrid. Weitere Beispiele werden in EP-A 784 080 beschrieben.

Die Komponente G ist in den erfindungsgemäßen Formmassen in einer Menge von 0 bis 50, vorzugsweise 1 bis 40, insbesondere 5 bis 40, ganz besonders 10 bis 20 Gew.-% enthalten.

Als teilchenförmige mineralische Füllstoffe G eignen sich zum Beispiel amorphe Kieselsäure, Carbonate wie Magnesiumcarbonat, Calziumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Kaolin, besonders kalzinierter Kaolin.

Nach einer besonders bevorzugten Ausführungsform werden teilchenförmige Füllstoffe G verwendet, von denen mindestens 95 Gew.-%, bevorzugt mindestens 98 Gew.-% der Teilchen einen Durchmesser (größte Ausdehnung), bestimmt am fertigen Produkt, von weniger als 45 µm, bevorzugt weniger als 40 µm aufweisen und deren so genanntes Aspektverhältnis vorzugsweise im Bereich von 1 bis 25, bevorzugt im Bereich von 2 bis 20 liegt, bestimmt am fertigen Produkt, d.h. in der Regel einem Spritzgussformteil.

Die Teilchendurchmesser können dabei zum Beispiel dadurch bestimmt werden, dass elektronenmikroskopische Aufnahmen von Dünnschichten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, der weniger als 40 µm beträgt, kann auch mittels Siebanalyse gemessen werden. Das Aspektverhältnis ist das Verhältnis von Teilchendurchmesser zu Dicke (größter Ausdehnung zu kleinster Ausdehnung).

Besonders bevorzugt werden als teilchenförmige Füllstoffe G Talkum, Kaolin, wie calcinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und einem Aspektverhältnis von 1,2 bis 20, jeweils bestimmt am fertigen Produkt. Bevorzugt wird z. B. ein fein gemahlener Talk (z. B. des Herstellers Omya International, Schweiz).

Als Komponente G werden auch faserförmige Füllstoffe wie Kohlenstofffasern, Kaliumtitanat-Whisker, Aramidfasern oder bevorzugt Glasfasern eingesetzt, wobei mindestens 50 Gew.-% der faserförmigen Füllstoffe (Glasfasern) eine Länge von mehr als 50 mm aufweisen. Die verwendeten (Glas)fasern können vorzugsweise einen Durchmesser von bis zu 25 µm, besonders bevorzugt 5 bis 13 µm aufweisen. Vorzugsweise weisen mindestens 70 Gew.-% der Glasfasern eine Länge von mehr als 60 µm auf. Besonders bevorzugt betragt im fertigen Formteil die mittlere Länge der Glasfasern 0,08 bis 0,5 mm. Die Länge der Glasfasern bezieht sich auf ein fertiges Formteil, das beispielsweise nach dem Spritzgießen erhalten wird. Dabei können die Glasfasern den Formmassen bereits in der entsprechend abgelängten Form oder auch in Form von Endlossträngen (Rovings) zugesetzt werden.

Als weitere Zusatzstoffe (Komponente H) sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Flammschutzmittel, Farbstoffe und Pigmente und Weichmacher zu nennen. Der Anteil der Komponente H beträgt im Allgemeinen 0 bis 40, vorzugsweise 2 bis 30, insbesondere 0,2 bis 10 Gew.-%, bezogen auf das Gesamtgewicht der Zusammensetzung.

Pigmente und Farbstoffe sind allgemein in Mengen von 0 bis 4, bevorzugt 0 bis 3,4 und insbesondere 0,5 bis 3 Gew.-% enthalten.

Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃.Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr, Fe)₂O₄), Manganschwarz (Mischung aus Mangandioxid, Siliciumoxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel erhältlich. Weiterhin kann es von Vorteil sein, die genannten Pigmente bzw. Farbstoffe in Mischung einzusetzen, zum Beispiel Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind zum Beispiel Halogenide von

Metallen der Gruppe 1 des Periodensystems, zum Beispiel Natrium-, Lithium-Halogenide, gegebenenfalls in Verbindung mit Kupfer-(I)-Halogeniden, zum Beispiel Chloriden, Bromiden und Iodiden. Die Halogenide, insbesondere des Kupfers, können auch noch elektronenreiche n-Liganden enthalten. Als Beispiel für derartige Kupferkomplexe seien Cu-Halogenid-Komplexe mit zum Beispiel Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im Allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und amide sowie Ester des Pentaerythrits mit langkettigen Fettsäuren. Es können auch Salze des Calciums, Zinks oder Aluminiums der Stearinsäure sowie Dialkylketone, zum Beispiel Distearylketon, eingesetzt werden. Weiterhin können auch Ethylenoxid-Propylenoxid-Copolymere als Gleit- und Entformungsmittel verwendet werden.

Insbesondere vorteilhaft ist der Einsatz von UV- und Wärmestabilisatoren für Polycarbonat und Styrolcopolymere. Beispiele geeigneter Stabilisatoren sind zudem in DE-A 44 19 897 aufgeführt. Weiterhin können Umesterungsinhibitoren, wie Phosphate, Phosphite oder Phosphonite enthalten sein.

Die Herstellung der erfindungsgemäßen thermoplastischen Formmassen erfolgt nach an sich bekannten Verfahren durch Mischen der Komponenten. Es kann vorteilhaft sein, einzelne Komponenten vorzumischen. Auch das Mischen der Komponenten in Lösung unter Enfernen der Lösungsmittel ist möglich. Geeignete organische Lösungsmittel sind beispielsweise Chlorbenzol, Gemische von Chlorbenzol und Methylenchlorid oder Gemische von Chlorbenzol und aromatischen Kohlenwasserstoffen wie Toluol. Vorzugsweise wird ohne chlorhaltige Lösungsmittel gearbeitet. Das Eindampfen der Lösungsmittelgemische kann beispielsweise in Eindampfextrudern erfolgen.

Das Mischen der beispielsweise trockenen Komponenten A bis D und gegebenenfalls E und F kann nach allen bekannten Methoden erfolgen. Vorzugsweise geschieht das Mischen bei Temperaturen von 200 bis 320°C durch gemeinsames Extrudieren, Kneten oder Verwalzen der Komponenten, wobei die Komponenten gegebenenfalls zuvor aus der bei der Polymerisation erhaltenen Lösung oder aus der wässrigen Dispersion isoliert worden sind.

Die erfindungsgemäßen thermoplastischen Formmassen können nach den bekannten Verfahren der Thermoplastverarbeitung verarbeitet werden, beispielsweise durch Extrudieren, Spritzgießen, Kalandrieren, Hohlkörperblasen oder Sintern.

Die erfindungsgemäßen Formmassen können zur Herstellung von Folien, Fasern und Formkörpern eingesetzt werden. Zudem können sie bevorzugt zur Herstellung von Karosserieteilen im Automobilsektor, insbesondere zur Herstellung von mechanisch anspruchsvollen Automobilteilen sowie von den eingangs genannten Bauteilen eingesetzt werden.

Die Erfindung betrifft auch entsprechende Formkörper, Fasern oder Folien sowie Karosserieteile von Kraftfahrzeugen und die eingangs beschriebenen Produkte.

Die Reihenfolge in der die Komponenten A bis D und ggf. E bis H gemischt werden, ist in der Regel beliebig wählbar.

Die erfindungsgemäßen Formmassen können nach an sich bekannten Verfahren, beispielsweise Extrusion, hergestellt werden. Die erfindungsgemäßen Formmassen können zum Beispiel hergestellt werden, indem man die Ausgangskomponenten in üblichen Mischvorrichtungen wie Schneckenextrudern vorzugsweise Zweischneckenextrudern, Brabender-Mischer oder Banburry-Mischer sowie Knetern mischt und anschließend extrudiert. Nach der Extrusion wird das Extrudat abgekühlt und zerkleinert. Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Durchmischung zu erhalten, ist eine intensive Durchmischung vorteilhaft. Dazu sind im Allgemeinen mittlere Mischzeiten von 0,2 bis 30 Minuten bei Temperaturen von 240 bis 300°C, bevorzugt von 245 bis 290°C, erforderlich. Nach der Extrusion wird das Extrudat in der Regel abgekühlt und zerkleinert.

Die erfindungsgemäßen Formmassen zeichnen sich überraschenderweise durch reduzierte Anisotropie der Kerbschlagzähigkeit aus.

Die Erfindung wird durch die nachfolgenden Beispiele erläutert:

### Beispiele

### Polymereigenschaften

Die Viskositätszahl der eingesetzten Polyamide wurde nach DIN 53 727 an 0,5 Gew.-%-igen Lösungen in 96 Gew.-% Schwefelsäure ermittelt.

Die Viskositätszahl der Styrolcopolymere und der Terpolymere wurde in 0,5 Gew.-%iger DMF-Lösung bei 25°C bestimmt.

Der Oligomeranteil der Terpolymere wurde durch GP-Messung bestimmt. Dabei wurde THF als Laufmittel verwendet. Zur Trennung wurde ein MixedB-Säulensatz (Hersteller Fa. Polymer Laboratories) eingesetzt. Die GPC-Anlage wurde mit Polystyrol PS-Eichproben ebenfalls von Fa. Polymer Laboratories, England, kalibriert. Als Oligomeranteil wurde dabei aus der integralen Masseverteilung bestimmte Anteile aller Moleküle mit einem Molgewicht kleiner 10.000 g/mol bezeichnet.

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.

Die Kerbschlagzähgikeit der Produkte wurde an ISO-Stäben nach der Norm ISO 179 1 eA bestimmt.

Zur Bestimmung der Richtungsabhängigkeit der Schlagzähigkeit wurden Platten der Größe 150 mm auf 150 mm auf 4 mm hergestellt (Massetemperatur 250°C, Werkzeugtemperatur 60°C). Mit einer Hochfrequenzfräse wurden ISO-Stäbe senkrecht und parallel zum Anguss (Bandanguss) entnommen.

Die Fließfähigkeit wurde nach der Norm ISO 1133 bei 240°C und 5 kg Belastung bestimmt.

### Herstellung und Prüfung der erfindungsgemäßen Formmassen

### a) Herstellung der Komponente A der erfindungsgemäßen Formmasse

Durch Massepolymerisation wurde ein Styrol-Acrylnitril-Copolymer mit 75 Gew.-% Styrol und 25 Gew.-% Acrylnitril und einer Viskositätszahl von 80 ml/g (bestimmt nach DIN 53726 oder DIN EN ISO 1628-2 in 0,5 Gew.-%iger DMF-Lösung bei 25°C) hergestellt. Das Molekulargewicht (Mn) beträgt etwa 85.000 g/mol (GPC in THF mit PS-Eichung): Stationäre Phase: 5-Styrol-divinylbenzol-Gel-Säulen (PLgel Mixed-B, Polymer Laboratories); THF 1,2 ml/min).

### b) Herstellung der Komponente B der erfindungsgemäßen Formmasse

Als Polyamid B wurde ein Polyamid 6, erhalten aus ε-Caprolactam, mit einer Viskositätszahl von 150 ml/g (gemessen 0,5 Gew.-%ig in 96 %iger Schwefelsäure) verwendet, z.B. Ultramid B3 ( ein niedrig-viskoses Polyamid 6 des Herstellers BASF Aktiengesellschaft, Ludwigshafen).

### c) Herstellung der Komponente C1 der erfindungsgemäßen Formmasse

Es wurde in Emulsionspolymerisation unter Einsatz von Kaliumperoxodisulfat als Initiator ein Pfropfkautschuk mit 62 Gew.-% Polybutadien als Pfropfgrundlage und 38 Gew.-% einer Pfropfauflage aus 75 Gew.-% Styrol und 25 Gew.-% Acrylnitril hergestellt. Die mittlere Teilchengröße betrug ca. 400 nm (gemessen mittels Ultra-zentrifuge).

### Herstellung der Komponente C2 der erfindungsgemäßen Formmasse

Es wurde in Emulsionspolymerisation unter Einsatz von Kaliumperoxodisulfat als Initiator ein Pfropfkautschuk mit 70 Gew.-% Polybutadien als Grundlage und 30 Gew.-% einer Pfropfauflage aus 75 Gew.-% Styrol und 25 Gew.-% Acrylnitril hergestellt. Die mittlere Teilchengröße betrug ca. 370 nm.

### Herstellung der Komponente D1 der erfindungsgemäßen Formmasse

Als Komponente D1 wurde ein Styrol-Acrylnitril-Maleinsäureanhydrid-Terpolymer verwendet, welches eine Zusammensetzung von 74 / 23,8/ 2,2 (jeweils Gew.-%) hatte. Die Viskositätszahl betrug 80 ml/g: Der Masseanteil mit einem Molekulargewicht bis 10000 g/mol betrug lediglich 1,7 Gew.-%.

### Herstellung der Komponente D2

Als Komponente D2 wurde ein Styrol-Acrylnitril-Maleinsäureanhydrid-Terpolymer verwendet, welches eine Zusammensetzung von 74 / 23,8/ 2,2 (jeweils Gew.-%) hatte. Die Viskositätszahl betrug 80 ml/g: Der Masseanteil mit einem Molekulargewicht bis 10000 g/mol betrug 4,1 Gew.-%.

### Einsatz der Komponente F in der erfindungsgemäßen Formmasse

Als Komponente F wurde Phthalsäureanhydrid (als bifunktionelles, aromatisches Carbonsäurederivat; mit einem Molgewicht von 148 g/mol) eingesetzt.

### Verwendung der Komponente G2 in der erfindungsgemäßen Formmasse

Als Komponente G2 wurde Talk, z.B. Talkum IT-Extra (Hersteller: Omya) eingesetzt.

### Herstellung der erfindungsgemäßen Formmassen

Die in Tabelle 1 für die erfindungsgemäßen Zusammensetzungen (2, 4, 5 und 7) und die Vergleichszusammensetzungen (V1, V3 und V6) beschriebenen Komponenten wurden in einem Zweiwellen-Extruder bei einer Massetemperatur von 240 bis 260°C gemischt.

Die Schmelze wurde anschließend durch ein Wasserbad geleitet und granuliert.

Die Ergebnisse der Prüfungen sind in der nachfolgenden Tabelle 1 aufgeführt.

**Tabelle 1**

| Formmasse | V1 | 2 | V3 | 4 | 5 | V6 | 7 |
|---|---|---|---|---|---|---|---|
| A | 19 | 19 | 19 | 19 | 19 | 22 | 22 |
| B | 41 | 41 | 41 | 41 | 41 | 41 | 41 |
| C1 | 35 | 35 | 32 | 32 | 27 | 22 | 22 |
| C2 | - | - | 3 | 3 | 8 | - | - |
| D1 | - | 4,8 | - | 4,8 | 4,8 | - | 4,8 |
| D2 | 4,8 | - | 4,8 | - | - | 4,8 | - |
| F | 0,2 | 0,2 | 0,2 | 0,2 | 0,2 | 0,2 | 0,2 |
| G2 | - | - | - | - | - | 10 | 10 |
| Vicat B [°C] | 105 | 105 | 104 | 105 | 103 | 109 | 110 |
| MVI [ml/10'] | 5,7 | 5,6 | 7,9 | 8,1 | 6,2 | 4,8 | 4,7 |
| Ak, RT, flow [kJ/m²] | 56 | 55 | 62 | 66 | 71 | 14 | 16 |
| Ak, RT, X-flow [kJ/m²] | 43 | 49 | 44 | 58 | 64 | 8 | 11 |

Die erfindungsgemäßen Formmassen weisen überraschenderweise eine reduzierte Anisotropie bezüglich der Kerbschlagzähigkeit (kJ/m²) auf, was sich an der Differenz der Ak-Werte in Tabelle 1 erkennen lässt.

Selbst bei den mit Talk als Füllstoff versetzten Formmassen ließ sich die verminderte Anisotropie bei Verwendung der Komponente D1 (mit vermindertem Oligomerengehalt) beobachten.

## Patentansprüche

1. Thermoplastische Formmasse, enthaltend die Komponenten A, B, C und D, sowie gegebenenfalls die weiteren Komponenten E, F, G und H, deren Summe insgesamt 100 Gew.-% ergibt, wobei die Formmasse enthält:
a) 3 bis 91,9 Gew.-% eines oder mehrerer Styrolcopolymere A,
b) 3 bis 91 Gew.-% eines oder mehrerer Polyamide B,
c) 5 bis 50 Gew.-% eines oder mehrerer Pfropfpolymerisate C
d) 0,1 bis 25 Gew.-% eines oder mehrerer Terpolymere D, wobei diese einen Oligomerenanteil, welcher den Anteil aller Moleküle mit einem gewichtsmittleren Molekulargewicht (M_{W}) kleiner als 10.000 g/mol bezeichnet, von kleiner als 3 Gew.-% aufweisen,
e) 0 bis 40 Gew.-% eines weiteren Kautschuks E,
f) 0 bis 3 Gew.-% eines mindestens monofunktionellen Anhydrids F mit einem Molgewicht von-kleiner 3000 g/mol;
g) 0 bis 50 Gew.-% an faser- und/oder teilchenförmigen Füllstoffen G,
h) 0 bis 40 Gew.-% weiterer Zusatzstoffe H.

2. Formmasse gemäß Anspruch 1, **dadurch gekennzeichnet, dass** sie von 10 bis 60 Gew.-% eines oder mehrerer Styrolcopolymere A enthält, wobei dieses Styrol-Copolymer A aus zwei oder mehreren Monomeren aus der Gruppe Styrol, Acrylnitril, α-Methylstyrol und Methylmethacrylat aufgebaut ist.

3. Formmasse gemäß einem der Ansprüche 1 oder 2, **dadurch gekennzeichnet, dass** sie von 10 bis 80 Gew.-% eines oder mehrerer Styrolcopolymere A enthält, wobei dieses Styrol-Copolymer A aus zwei oder drei Monomeren aus der Gruppe Styrol, Acrylnitril und/oder α-Methylstyrol aufgebaut ist.

4. Formmasse gemäß einem der Anspruche 1 bis 3, **dadurch gekennzeichnet, dass** sie 30 bis 80 Gew.-% eines oder mehrerer Polyamide B enthält, wobei es sich um Homopolyamide, Copolyamide oder Mischungen daraus handelt.

5. Formmasse gemäß einem der Ansprüche 1 bis 4, **dadurch gekennzeichnet, dass** sie 30 bis 70 Gew.-% eines oder mehrerer Polyamide B enthält, wobei das Polyamid B aus Monomeren aus der Gruppe: Terephtalsäure, Adipinsäure, Hexamethylendiamin, Butandiamin, Phenylendiamin und/oder ε-Caprolactam aufgebaut ist.

6. Formmasse gemäß einem der Ansprüche 1 bis 5, **dadurch gekennzeichnet, dass** sie 10 bis 40 Gew.-% eines oder mehrerer Pfropfpolymerisate C enthält, wobei dieses Pfropfpolymerisat C aus einer Pfropfgrundlage und mindestens einer Pfropfauflage aufgebaut ist, wobei das Pfropfpolymerisat C aus zwei oder mehreren Monomeren aus der Gruppe Butadien, Styrol, Acrylnitril, alpha-Methylstyrol, MMA, Butylacrylat, Ethylacrylat und/oder Methylacrylamid aufgebaut ist.

7. Formmasse gemäß einem der Ansprüche 1 bis 6, **dadurch gekennzeichnet, dass** sie 10 bis 40 Gew.-% eines oder mehrerer Pfropfpolymerisate C enthält, wobei dieses Pfropfpolymerisat C aus einer Pfropfgrundlage aus Polybutadien und mindestens einer Pfropfauflage aufgebaut ist, wobei die Pfropfauflage aus zwei oder mehreren Monomeren aus der Gruppe Styrol, Acrylnitril, alpha-Methylstyrol, Ethylacrylat und/oder Methylacrylamid aufgebaut ist.

8. Formmasse gemäß einem der Ansprüche 1 bis 7, **dadurch gekennzeichnet, dass** sie 1 bis 15 Gew.-% eines Terpolymeren D enthält, wobei dieses Terpolymere D einen Oligomerenanteil von kleiner als 3 Gew.-% aufweist und aus drei oder mehreren Monomeren aus der Gruppe Styrol, Acrylnitril, alpha-Methylstyrol, Methylmetacrylat, Maleinsäureimid und/oder Maleinsäureanhydrid aufgebaut ist.

9. Formmasse gemäß einem der Ansprüche 1 bis 8, **dadurch gekennzeichnet, dass** sie 1 bis 15 Gew.-% eines Terpolymeren D enthält, wobei dieses Terpolymere D einen Oligomerenanteil von kleiner als 3 Gew.-% aufweist und aus den drei Monomeren Styrol, Acrylnitril und Maleinsäureanhydrid aufgebaut ist.

10. Formmasse gemäß einem der Ansprüche 1 bis 9, **dadurch gekennzeichnet, dass** sie zusätzlich 1 bis 30 Gew.-% weiterer Kautschuke E enthält, wobei dieser weitere Kautschuk zwei oder mehreren Monomeren aus der Gruppe Ethen, Propen, Buten und/oder Octen enthält.

11. Formmasse gemäß einem der Ansprüche 1 bis 10, **dadurch gekennzeichnet, dass** sie zusätzlich 1 bis 30 Gew.-% mindestens eines weiteren Kautschuks E enthält, wobei dieser Kautschuk E die Monomeren Ethen, Propen und/oder 1-Buten enthält.

12. Formmasse gemäß einem der Ansprüche 1 bis 11, **dadurch gekennzeichnet, dass** sie zusätzlich 0,1 bis 2 Gew.-% eines mindestens monofunktionellen Anhydrids F mit einem Molgewicht von kleiner 3000 g/mol enthält.

13. Formmasse gemäß einem der Ansprüche 1 bis 12, **dadurch gekennzeichnet, dass** sie zusätzlich 5 bis 40 Gew.-% an faser- und/oder teilchenförmigen Füllstoffen G enthält.

14. Formmasse gemäß einem der Ansprüche 1 bis 13, **dadurch gekennzeichnet, dass** sie zusätzlich 2 bis 30 Gew.-% weiterer Zusatzstoffe H aus der Gruppe der Stabilisatoren und Pigmente enthält.

15. Formmasse gemäß einem der Ansprüche 1 bis 14, **dadurch gekennzeichnet, dass** sie
a) 3 bis 91,9 Gew.-% eines Styrolcopolymeren A aus Styrol und Acrylnitril,
b) 3 bis 91 Gew.-% eines Polyamids B,
c) 5 bis 50 Gew.-% eines Pfropfpolymerisats C aus
c1) 40 bis 80 Gew.-% einer Pfropfgrundlage aus einem kautschukelastischen Polymeren C1 auf der Basis von Alkylacrylaten mit 1 bis 8 C-Atomen im Alkylrest, Ethylen/Propylen, Dienen oder Siloxanen und mit einer Glasübergangstempreatur von unter 0°C,
c2) 20 bis 60 Gew.-% einer Pfropfauflage C2 aus
c21) 60 bis 90 Gew.-% Styrol oder alpha-Methylstyrol und
c22) 5 bis 40 Gew.-% mindestens eines ungesättigten Nitrils C22,
d) 0,1 bis 25 Gew.-% eines Terpolymeren D mit einem Oligomerenanteil, welcher den Anteil aller Moleküle mit einem gewichtsmittleren Molekulargewicht (M_{w}) kleiner als 10.000 g/mol bezeichnet, von kleiner als 3 Gew.-%, aus den Bestandteilen
d1) 60 bis 85 Gew-.% Styrol oder alpha-Methyl-Styrol oder deren Mischungen und
d2) 15 bis 40 Gew.-% Acrylnitril
d3) 0,1 bis 5 Gew.-% Maleinsäureanhydrid;
e) 0 bis 40 Gew.-% weiterer Kautschuke E,
f) 0 bis 3 Gew.-% eines mindestens monofunktionellen Anhydrids F mit einem Molgewicht von kleiner 3000 g/mol;
g) 0 bis 50 Gew.-% an Faser- oder teilchenförmigen Füllstoffen G,
h) 0 bis 40 Gew.-% weiterer Zusatzstoffe H
enthält.

16. Formmasse gemäß einem der Ansprüche 1 bis 15, **dadurch gekennzeichnet, dass** die Komponente A aus 60 bis 85 Gew.-% Styrol und 15 bis 40 Gew.-% Acrylnitril aufgebaut ist.

17. Formmasse nach einem der Ansprüche 1 bis 16, **dadurch gekennzeichnet, dass** in Komponente C mindestens 90 Gew.-% der Teilchen der Pfropfgrundlage einen Durchmesser von weniger als 450 nm aufweisen.

18. Verfahren zur Herstellung von Formmassen nach einem der Ansprüche 1 bis 17 durch Mischen der Komponenten A bis D und gegebenenfalls der Komponenten E bis H.

19. Verwendung von Formmassen nach einem der Ansprüche 1 bis 17 zur Herstellung von Fasern, Folien und Formkörpern.

20. Verwendung nach Anspruch 19 zur Herstellung von Haushaltsartikeln, elektronische Bauteilen, Haushaltsgeräten, Gartengeräten, medizinisch-technische Geräten, Kfz-Bauteilen und Karosserieteilen.

21. Formkörper, Fasern und Folien aus einer Formmasse gemäß einem der Ansprüche 1 bis 17.

## Claims

1. A thermoplastic composition comprising components A, B, C, and D, and also, if appropriate, the further components E, F, G, and H, the entirety of which gives a total of 100% by weight, where the molding composition comprises:
a) from 3 to 91.9% by weight of one or more styrene copolymers A,
b) from 3 to 91 % by weight of one or more polyamides B,
c) from 5 to 50% by weight of one or more graft polymers C,
d) from 0.1 to 25% by weight of one or more terpolymers D, where these have less than 3% by weight oligomer content, where this is the term used for the content of all molecules whose weight-average molar mass (M_{W}) is smaller than 10 000 g/mol,
e) from 0 to 40% by weight of a further rubber E,
f) from 0 to 3% by weight of an at least monofunctional anhydride F whose molar mass is smaller than 3000 g/mol,;
g) from 0 to 50% by weight of fibrous and/or particulate fillers G,
h) from 0 to 40% by weight of further additives H.

2. The molding composition according to claim 1, which comprises from 10 to 60% by weight of one or more styrene copolymers A, where this styrene copolymer A is composed of two or more monomers from the group of styrene, acrylonitrile, α-methylstyrene, and methyl methacrylate.

3. The molding composition according to claim 1 or 2, which comprises from 10 to 80% by weight of one or more styrene copolymers A, where this styrene copolymer A is composed of two or three monomers from the group of styrene, acrylonitrile, and/or α-methylstyrene.

4. The molding composition according to any of claims 1 to 3, which comprises from 30 to 80% by weight of one or more polyamides B, where these are homopolyamides, copolyamides, or a mixture thereof.

5. The molding composition according to any of claims 1 to 4, which comprises from 30 to 70% by weight of one or more polyamides B, where the polyamide B is composed of monomers from the group of: terephthalic acid, adipic acid, hexamethylenediamine, butanediamine, phenylenediamine, and/or ε-caprolactam.

6. The molding composition according to any of claims 1 to 5, which comprises from 10 to 40% by weight of one or more graft polymers C, where this graft polymer C is composed of a graft base and of at least one graft, where the graft polymer C is composed of two or more monomers from the group of butadiene, styrene, acrylonitrile, alpha-methylstyrene, MMA, butyl acrylate, ethyl acrylate, and/or methylacrylamide.

7. The molding composition according to any of claims 1 to 6, which comprises from 10 to 40% by weight of one or more graft polymers C, where this graft polymer C is composed of a graft base composed of polybutadiene and of at least one graft, where the graft is composed of two or more monomers from the group of styrene, acrylonitrile, alpha-methylstyrene, ethyl acrylate, and/or methylacrylamide.

8. The molding composition according to any of claims 1 to 7, which comprises from 1 to 15% by weight of a terpolymer D, where this terpolymer D has less than 3% by weight of oligomer content and is composed of three or more monomers from the group of styrene, acrylonitrile, alpha-methylstyrene, methyl methacrylate, maleimide, and/or maleic anhydride.

9. The molding composition according to any of claims 1 to 8, which comprises from 1 to 15% by weight of a terpolymer D, where this terpolymer D has less than 3% by weight of oligomer content and is composed of the three monomers styrene, acrylonitrile, and maleic anhydride.

10. The molding composition according to any of claims 1 to 9, which also comprises from 1 to 30% by weight of further rubbers E, where this further rubber comprises two or more monomers from the group of ethene, propene, butene, and/or octene.

11. The molding composition according to any of claims 1 to 10, which also comprises from 1 to 30% by weight of at least one further rubber E, where this rubber E comprises the monomers ethene, propene, and/or 1-butene.

12. The molding composition according to any of claims 1 to 11, which also comprises from 0.1 to 2% by weight of an at least monofunctional anhydride F whose molar mass is smaller than 3000 g/mol.

13. The molding composition according to any of claims 1 to 12, which also comprises from 5 to 40% by weight of fibrous and/or particulate fillers G.

14. The molding composition according to any of claims 1 to 13, which also comprises from 2 to 30% by weight of further additives H from the group of the stabilizers and pigments.

15. The molding composition according to any of claims 1 to 14, which comprises
a) from 3 to 91.9% by weight of a styrene copolymer A composed of styrene and acrylonitrile,
b) from 3 to 91 % by weight of a polyamide B,
c) from 5 to 50% by weight of a graft polymer C composed of
c1) from 40 to 80% by weight of a graft base composed of an elastomeric polymer C1 based on alkyl acrylates having from 1 to 8 carbon atoms in the alkyl radical, ethylene/propylene, dienes, or siloxanes, and with a glass transition temperature below 0°C,
c2) from 20 to 60% by weight of a graft C2 composed of c21) from 60 to 90% by weight of styrene or alpha-methylstyrene, and c22) from 5 to 40% by weight of at least one unsaturated nitrile C22,
d) from 0.1 to 25% by weight of a terpolymer D with less than 3% by weight of oligomer content, where this is the term used for the content of all molecules whose weight-average molar mass (M_{W}) is smaller than 10 000 g/mol, composed of the following constituents:
d1) from 60 to 85% by weight of styrene or alpha-methylstyrene, or a mixture of these, and
d2) from 15 to 40% by weight of acrylonitrile,
d3) from 0.1 to 5% by weight of maleic anhydride;
e) from 0 to 40% by weight of further rubbers E,
f) from 0 to 3% by weight of an at least monofunctional anhydride F whose molar mass is smaller than 3000 g/mol;
g) from 0 to 50% by weight of fibrous or particulate fillers G,
h) from 0 to 40% by weight of further additives H.

16. The molding composition according to any of claims 1 to 15, wherein component A is composed of from 60 to 85% by weight of styrene and from 15 to 40% by weight of acrylonitrile.

17. The molding composition according to any of claims 1 to 16, wherein, in component C, at least 90% by weight of the particles of the graft base have a diameter of less than 450 nm.

18. A process for preparation of molding compositions according to any of claims 1 to 17 via mixing of components A to D and, if appropriate, components E to H.

19. The use of molding compositions according to any of claims 1 to 17 for production of fibers, of foils, and of moldings.

20. The use according to claim 19 for production of household items, of electronic components, of household equipment, of garden equipment, of medical-technology equipment, of motor vehicle components, and of bodywork parts.

21. A molding, a fiber, or a foil composed of a molding composition according to any of claims 1 to 17.

## Revendications

1. Matière à mouler thermoplastique, contenant les composants A, B, C et D, ainsi qu'éventuellement les autres composants E, F, G et H, dont la somme globale est égale à 100 % en poids, la matière à mouler contenant :
a) de 3 à 91,9 % en poids d'un ou plusieurs copolymères de styrène A,
b) de 3 à 91 % en poids d'un ou plusieurs polyamides B,
c) de 5 à 50 % en poids d'un ou plusieurs produits de polymérisation par greffage C,
d) de 0,1 à 25 % en poids d'un ou plusieurs terpolymères D, ces derniers ayant une teneur en oligomères, qui désigne la proportion de toutes les molécules ayant une masse moléculaire moyenne en poids (M_{W}) inférieure à 10 000 g/mole, de moins de 3 % en poids,
e) de 0 à 40 % en poids d'un autre caoutchouc E,
f) de 0 à 3 % en poids d'un anhydride au moins monofonctionnel F
ayant une masse moléculaire inférieure à 3 000 g/mole ;
g) de 0 à 50 % en poids de charges fibreuses et/ou particulaires G,
h) de 0 à 40 % en poids d'autres additifs H.

2. Matière à mouler selon la revendication 1, **caractérisée en ce qu'**elle contient de 10 à 60 % en poids d'un ou plusieurs copolymères de styrène A, ce copolymère de styrène A étant constitué de deux ou plus de deux monomères choisis dans le groupe consistant en le styrène, l'acrylonitrile, l'α-méthylstyrène et le méthacrylate de méthyle.

3. Matière à mouler selon la revendication 1 ou 2, **caractérisée en ce qu'**elle contient de 10 à 80 % en poids d'un ou plusieurs copolymères de styrène A, ce copolymère de styrène A étant constitué de deux ou trois monomères choisis dans le groupe consistant en le styrène, l'acrylonitrile et/ou l'α-méthylstyrène.

4. Matière à mouler selon l'une quelconque des revendications 1 à 3, **caractérisée en ce qu'**elle contient de 30 à 80 % en poids d'un ou plusieurs polyamides B, qui consistent en homopolyamides, copolyamides ou des mélanges de ceux-ci.

5. Matière à mouler selon l'une quelconque des revendications 1 à 4, **caractérisée en ce qu'**elle contient de 30 à 70 % en poids d'un ou plusieurs polyamides B, le polyamide B étant constitué de monomères choisis dans le groupe : acide téréphtalique, acide adipique, hexaméthylènediamine, butanediamine, phénylènediamine et/ou e-caprolactame.

6. Matière à mouler selon l'une quelconque des revendications 1 à 5, **caractérisée en ce qu'**elle contient de 10 à 40 % en poids d'un ou plusieurs produits de polymérisation par greffage C, un tel produit de polymérisation par greffage C étant constitué d'une base de greffage et d'au moins un greffon, le produit de polymérisation par greffage C étant composé de deux ou plus de deux monomères choisis dans le groupe constitué par le butadiène, le styrène, l'acrylonitrile, l'alpha-méthylstyrène, le MMA, l'acrylate de butyle, l'acrylate d'éthyle et/ou le méthylacrylamide.

7. Matière à mouler selon l'une quelconque des revendications 1 à 6, **caractérisée en ce qu'**elle contient de 10 à 40 % en poids d'un ou plusieurs produits de polymérisation par greffage C, un tel produit de polymérisation par greffage C étant constitué d'une base de greffage en polybutadiène et d'au moins un greffon, le greffon étant constitué de deux ou plus de deux monomères choisis dans le groupe consistant en le styrène, l'acrylonitrile, l'alphaméthylstyrène, l'acrylate d'éthyle et/ou le méthylacrylamide.

8. Matière à mouler selon l'une quelconque des revendications 1 à 7, **caractérisée en ce qu'**elle continent de 1 à 15 % en poids d'un terpolymère D, ce terpolymère D présentant une teneur en oligomères de moins de 3 % en poids et étant constitué de trois ou plus de trois monomères choisis dans le groupe consistant en le styrène, l'acrylonitrile, l'alphaméthylstyrène, le méthacrylate de méthyle, le maléimide et/ou l'anhydride maléique.

9. Matière à mouler selon l'une quelconque des revendications 1 à 8, **caractérisée en ce qu'**elle contient de 1 à 15 % en poids d'un terpolymère D, ce terpolymère D ayant une teneur en oligomères de moins de 3 % en poids et étant constitué des trois monomères styrène, acrylonitrile et anhydride maléique.

10. Matière à mouler selon l'une quelconque des revendications 1 à 9, **caractérisée en ce qu'**elle contient en outre de 1 à 30 % en poids d'autres caoutchoucs E, cet autre caoutchouc contenant deux ou plus de deux monomères choisis dans le groupe consistant en éthène, propène, butène et/ou octène.

11. Matière à mouler selon l'une quelconque des revendications 1 à 10, **caractérisée en ce qu'**elle contient en outre de 1 à 30 % en poids d'au moins un autre caoutchouc E, cet autre caoutchouc E contenant les monomères éthène, propène et/ou 1-butène.

12. Matière à mouler selon l'une quelconque des revendications 1 à 11, **caractérisée en ce qu'**elle contient en outre de 0,1 à 2 % en poids d'un anhydride au moins monofonctionnel F ayant une masse moléculaire de moins de 3 000 g/mole.

13. Matière à mouler selon l'une quelconque des revendications 1 à 12, **caractérisée en ce qu'**elle contient en outre de 5 à 40 % en poids de charges fibreuses et/ou particulaires G.

14. Matière à mouler selon l'une quelconque des revendications 1 à 13, **caractérisée en ce qu'**elle contient en outre de 2 à 30 % en poids d'autres additifs H choisis dans le groupe des stabilisants et pigments.

15. Matière à mouler selon l'une quelconque des revendications 1 à 14, **caractérisée en ce qu'**elle contient
a) de 3 à 91,9 % en poids d'un copolymère A de styrène à base de styrène et acrylonitrile,
b) de 3 à 91 % en poids d'un polyamide B,
c) de 5 à 50 % en poids d'un produit de polymérisation par greffage C, composé de
c1) 40 à 80 % en poids d'une base de greffage en un polymère C1 élastique comme le caoutchouc, à base d'acrylates d'alkyle ayant de 1 à 8 atomes de carbone dans le radical alkyle, d'éthylène/propylène, de diènes ou de siloxanes et ayant une température de transition vitreuse inférieure à 0 °C ;
c2) 20 à 60 % en poids d'un greffon C2 composé de
c21) 60 à 90 % en poids de styrène ou d'alphaméthylstyrène et
c22) 5 à 40 % en poids d'au moins un nitrile insaturé C22,
d) de 0,1 à 25 % en poids d'un terpolymère D ayant une teneur en oligomères, qui désigne la proportion de toutes les molécules ayant une masse moléculaire moyenne en poids (M_{W}) inférieure à 10 000 g/mole, de moins de 3 % en poids, à base des composants
d1) 60 à 85 % en poids de styrène ou d'alphaméthylstyrène ou de mélanges de ceux-ci et
d2) 15 à 40 % en poids d'acrylonitrile
d3) 0,1 à 5 % en poids d'anhydride maléique ;
e) de 0 à 40 % en poids d'autres caoutchoucs E,
f) de 0 à 3 % en poids d'un anhydride au moins monofonctionnel F ayant une masse moléculaire inférieure à 3 000 g/mole ;
g) de 0 à 50 % en poids de charges fibreuses ou particulaires G,
h) de 0 à 40 % en poids d'autres additifs H.

16. Matière à mouler selon l'une quelconque des revendications 1 à 15, **caractérisée en ce que** le composant A est constitué de 60 à 85 % en poids de styrène et de 15 à 40 % en poids d'acrylonitrile.

17. Matière à mouler selon l'une quelconque des revendications 1 à 16, **caractérisée en ce que** dans le composant C au moins 90 % en poids des particules de la base de greffage ont un diamètre inférieur à 450 nm.

18. Procédé pour la production de matières à mouler selon l'une quelconque des revendications 1 à 17, par mélange des composants A à D et éventuellement des composants E à H.

19. Utilisation de matières à mouler selon l'une quelconque des revendications 1 à 17, pour la fabrication de fibres, films et corps moulés.

20. Utilisation selon la revendication 19, pour la fabrication d'articles ménagers, de composants électroniques, d'appareils ménagers, d'outils de jardinage, d'appareils de technique médicale, de pièces de construction de véhicules automobiles et de pièces de carrosseries.

21. Corps moulés, fibres et films à base d'une matière à mouler selon l'une quelconque des revendications 1 à 17.
